# EUROPÄISCHE PATENTSCHRIFT

(11) **EP 3 404 290 B1**
(45) Veröffentlichungstag und Bekanntmachung des Hinweises auf die Patenterteilung: **27.11.2019**
(21) Anmeldenummer: 18172432.9
(22) Anmeldetag: 15.05.2018
(51) Int. Cl.: F16G 13/20, E05F 11/00

(54) **MIT EINEM KETTENANTRIEB BETÄTIGBARE SCHIEBESTEIFE SCHUBKETTE**
PUSH RESISTANT THRUST CHAIN ACTUATED WITH CHAIN TRANSMISSION
CHAÎNE DE POUSSÉE RIGIDE AU GLISSEMENT ACTIONNABLE PAR UN ENTRAÎNEMENT À CHAÎNE

(30) Priorität: 15.05.2017 EP 17171146
(43) Veröffentlichungstag der Anmeldung: 21.11.2018
(73) Patentinhaber: K+G Pneumatik GmbH, 52249 Eschweiler (DE)
(72) Erfinder: Maul, Hans-Erich, 52068 Aachen (DE)
(74) Vertreter: Tergau & Walkenhorst Patentanwälte PartGmbB

(56) Entgegenhaltungen:
- EP-A2- 2 520 827
- CZ-B6- 304 006
- DE-A1-102005 052 520
- DE-A1-102006 059 711
- DE-U1-202017 101 466

## Beschreibung

Die Erfindung betrifft eine mit einem Kettenantrieb betätigbare schiebesteife Schubkette nach dem Oberbegriff des Anspruchs 1.

Derartige Schubketten sollen Schubkräfte zumindest über einen Schubkettenabschnitt geradlinig übertragen, ohne in einer Richtung quer zu der Schubrichtung abzuknicken und als Gegenmaßnahme einer aufwendigen Führung zu bedürfen. Andererseits sollen solche Schubketten in einer vorgegebenen Umlenkposition mit möglichst geringen Krafteinsatz umgelenkt werden, um anschließend in einer anderen linearen Schubrichtung zu verlaufen. Die Umlenkposition der Schubkette ist insbesondere auch deren Antriebsposition, in der ein Kettenrad eines Kettenantriebs in die Schubkette eingreift. Das Kettenrad ist in diesem Fall bezüglich des gekrümmten Schubkettenabschnitts, in den es eingreift, herkömmlich innen angeordnet.

Solche Schubketten (DE102006059711A1 und DE102005052520A1) werden beispielsweise zur Betätigung von Fenstern, Türen, Klappen und Lichtkuppeln, insbesondere in RWA-Anlagen in Gebäuden, eingesetzt.

Eine bekannte Schubkette, die den vorstehenden Anforderungen weitgehend genügt, besteht aus sandwichartigen zusammengesetzten Kettengliedern, deren Innenteil jeweils ein Scheibenpaket aus wenigstens zwei formgleichen, bündig angeordneten Scheiben umfasst (DE 20 2017 101 466.5). Die Scheiben sind zur guten Führung der Schubkette durch ein Antriebsgehäuse als Kreisscheibensegmente mit jeweils einem kreisabschnittsförmigen, von einem spitzen Rastnocken und einer kongruenten Rastvertiefung begrenzten Außenrand und einem sich daran anschließenden außen gegenüber liegenden eingebuchteten Innenrand geformt. Zwischen dem Außenrand und dem Innenrand jeder Scheibe sind neben der Einbuchtung des Innenrands zwei Bolzenaufnahmelöcher ausgebildet, die jeweils einen das Innenteil in dem Kettenglied fixierende Bolzen aufnehmen. Jeder der beiden Bolzen ist außerdem geeignet, in ein Bolzenaufnahmeloch in ebenfalls formgleichen, bündig angeordneten Scheiben eines seitlich benachbarten Scheibenpakets schwenkbar einzugreifen. Derartige Kettenglieder können fertigungsgünstig dimensioniert, d. h. an die zu übertragenden Schubkräfte angepasst werden, in dem die Scheiben des Innenteils mit einer formgleichen Scheibe oder mehreren solcher Scheiben zu einem verstärkten Innenteil ergänzt werden. Die Scheiben sind als Kreisscheibensegmente zur reibungsarmen Kraftübertragung dergestalt ausgebildet, dass der Außenrand und der eingebuchtete Innenrand der Scheiben zahnförmige, von dem bogenförmigen Außenrand ausgehend nach innen gerichtete Vorsprünge mit Evolventenkontur einschließen. Zum Antrieb der Schubkette ist ein Kettenantriebsrad vorgesehen, welches an die Gliederform der Schubkette bzw. deren Scheiben dadurch angepasst ist, dass die äußeren Enden der Zähne des Kettenrads im Wesentlichen zylindrisch geformt sind. Diese Zähne des Kettenrads können reibungsarm an den radial zahnförmigen Vorsprüngen der Glieder der Schubkette bzw. der Scheiben des Innenteils der Kettenglieder zum Antrieb und gegebenenfalls zur Umlenkung der Schubkette mittels des Kettenrads gleiten. Bei Ausstattung der Endabschnitte der Zähne des Kettenrads mit drehbar gelagerten Rollen können diese besonders reibungsarm an den zahnförmigen Vorsprüngen der Scheiben abrollen, wodurch ein ruhiger Lauf und ein hoher Gesamtwirkungsgrad erreicht werden. Allerdings erfordern die drehbaren Rollen des Kettenrads einen größeren Herstellungsaufwand.

Der vorliegenden Erfindung liegt daher die Aufgabe zugrunde, die Teile der Kettenglieder der Schubkette so auszubilden, dass deren Fertigung weiter vereinfacht wird und dass die aus ihnen bestehende Schubkette auch bei Umlenkung der Schubkette nur eine geringe Antriebskraft erfordert. Weiterhin soll die Kette außerhalb des Umlenkabschnitts möglichst keine seitliche Führung erfordern. Zur Lösung dieser Aufgabe geht die Erfindung von einer mit einem Kettenantrieb betätigbaren Schubkette aus, die aus formgleichen Scheiben bündig zusammengesetzte Kettenglieder umfasst, wobei jede Scheibe wenigstens einen bogenförmigen Randabschnitt, der sich im Wesentlichen in einer Längsrichtung der Scheibe erstreckt, einen dem bogenförmigen Randabschnitt außen gegenüberliegenden Randabschnitt und zahnförmige Vorsprünge an einem der Randabschnitte aufweist, wobei in jeder Scheibe zwei Bolzenaufnahmelöcher vorhanden sind, die geeignet sind, jeweils einen, mehrere Scheiben zusammenhaltenden Bolzen aufzunehmen.

Für eine solche Schubkette sind die formgleichen Scheiben, aus denen jedes Kettenglied besteht, erfindungsgemäß jeweils in Form einer Zahnsegmentscheibe einem Zahnsegment eines Zahnrads nachgebildet, so dass aus dem bogenförmigen Randabschnitt der Zahnsegmentscheibe Zähne nach außen divergierend vorstehen. Dagegen ist der dem bogenförmigen Randabschnitt außen gegenüberliegende Randabschnitt der Zahnsegmentscheibe in deren Längsrichtung gerade bzw. plan geformt. Die Längsrichtung der Scheibe ist im Wesentlichen gleich deren Schubrichtung.

Aus solchen formgleichen Scheiben kleiner Bauform kann zusammen mit Bolzen ein vollständiges Kettenglied montiert werden, also einschließlich dessen Innenteil und Außenteilen, die das Innenteil seitlich einschließen. Dadurch, dass die als Zahnsegmentscheibe ausgebildete Scheibe von ihrem bogenförmigen Randabschnitt ausgehende, nach außen divergierende Zähne aufweist und der dem bogenförmigen Randabschnitt außen gegenüberliegende Randabschnitt in Längsrichtung der Zahnsegmentscheibe gerade bzw. plan ist, kann das Kettenglied jeweils mit einem antriebsseitigen Stirnrad eines Kettenantriebs angetrieben und umgelenkt werden, das gemäß Anspruch 10 bezüglich dem angetriebenen und in einem Bogen umgelenkten Schubkettenabschnitt außen angeordnet ist, so dass das antriebseitige Stirnrad des Stirnradgetriebes in die Zähne der Zahnsegmentscheiben eines Kettenglieds eingreift. Dabei werden die geraden Randabschnitte dieser Zahnsegmentscheiben an einer Umlenkrolle umgelenkt, die bezüglich dem angetriebenen und in einem Bogen umgelenkten Schubkettenabschnitt innen angeordnet ist. Dadurch kann das äußere antriebsseitige Stirnrad mit einem kleinen Hebelarm auf die Kreissegmentscheiben eines Kettenglieds gleichmäßig einwirken, wobei das Kettenglied an den geraden Randabschnitten ihrer Zahnsegmentscheiben an der Umlenkrolle in deren Umfangsrichtung umgelenkt wird.

Gemäß Anspruch 2 besteht das Kettenglied jeweils ausschließlich aus dem formgleichen, mittels der beiden Bolzen, die jeweils mehrere Scheiben zusammenhalten, zusammengesetzten Zahnsegmentscheiben. Es sind also keine weiteren Teile für ein Kettenglied vorzusehen und zu montieren, insbesondere nicht an dessen Außenseiten.

Die Zahnsegmentscheibe ist weiterhin nach Anspruch 3 besonders zweckmäßig mit wenigstens zwei stirnseitig außen aneinander liegenden Abstützflächen im Wesentlichen quer zur Längsrichtung der Zahnsegmentscheibe ausgebildet und weist auf einer Seite der Zahnsegmentscheibe eine von dieser Seite vorstehenden Nocke in Höhe der Abstützflächen auf. Die Höhe ist auf den geraden Rand der senkrecht ausgerichteten Zahnsegmentscheibe bezogen. Die Nocke kann sich somit an jeweils einer der Abstützflächen einer Zahnsegmentscheibe eines stirnseitig benachbarten Kettenglieds abstützen und einen Teil der Schubkraft übertragen, die das Kettenglied aufnimmt.

Besonders zweckmäßig weist die Zahnsegmentscheibe gemäß Anspruch 4 jeweils auf der der hervorstehenden Nocke außen gegenüber liegenden Seite eine Vertiefung auf, in die eine solche Nocke einer seitlich bündig benachbarten zweiten oder weiteren Zahnsegmentscheibe des Innenteils des Kettenglieds mit Übermaß passt. Durch Einsetzen der Nocke der letztgenannten Zahnsegmentscheibe des Innenteils in die Vertiefung der erstgenannten Zahnsegmentscheibe kann das Innenteil vormontiert werden und eine leichte Endmontage des Kettenglieds gestatten. Die Nocke einer Zahnsegmentscheibe kann somit beide Funktionen ausüben gemäß den Ansprüchen 3 und 4.

Aus einer einfachen Ausführungsform der Zahnsegmentscheibe nach Anspruch 5 brauchen nur drei Zähne ausgeformt zu sein.

Wegen der im Wesentlichen planen Form der Zahnsegmentscheibe ist diese fertigungsgünstig und gemäß den Ansprüchen 6 und 7 wahlweise zur Fertigung als Stanzteile als auch von gegossene Teile geeignet. Die auf einer Seite der Zahnsegmentscheibe herausragende Nocke und die auf der außen gegenüber liegenden Seite vorgesehenen Vertiefung zur Aufnahme einer solchen Nocke können mit dem Stanzvorgang geprägt bzw. mit dem Guss geformt werden.

Ein besonders einfaches ausschließlich aus solchen untereinander formgleichen Zahnsegmentscheiben und zwei Bolzen zusammengesetztes Kettenglied umfasst nach Anspruch 8 zwischen zwei seitlich äußeren parallel und bündig angeordneten Zahnsegmentscheiben nur eine weitere Zahnsegmentscheibe als Innenteil, welche gegenüber den äußeren Zahnsegmentscheiben in Längsrichtung versetzt ist und durch einen der beiden Bolzen mit den beiden äußeren Zahnsegmentscheiben paketartig zusammengehalten wird und gegenüber diesen schwenkbar ist. In den durch den Versatz der inneren Zahnscheibe geschaffenen Raum zwischen den äußeren Zahnsegmentscheiben kann eine innere Zahnsegmentscheibe eines sich an das Kettenglied anschließenden weiteren Kettenglieds teilweise aufgenommen werden und durch den zweiten der beiden Bolzen schwenkbar gehalten werden.

Zur Übertragung einer größeren Schubkraft kann das Kettenglied jeweils zwischen den beiden seitlich äußeren, parallel und bündig angeordneten Zahnsegmentscheiben gemäß Anspruch 9 ein Innenteil bestehend aus zwei Zahnsegmentscheiben aufweisen, die formgleich wie die nur eine Zahnsegmentscheibe des Innenteils der vorstehenden Ausführungsform ausgebildet sind und miteinander verbunden sind. Dieses Innenteil kann als ein bündig zusammengesetztes Teil einfach zwischen den beiden äußeren Zahnsegmentscheiben mittels eines der beiden Bolzen, mit denen die äußeren Zahnsegmentscheiben zusammengehalten werden, so montiert werden, dass das Innenteil über jeweils eine Stirnseite der beiden äußeren Zahnsegmentscheiben hinausragt.

Beide vorstehende Ausführungsformen der Kettenglieder sind zum Antrieb der aus ihnen gebildeten Schubkette mit einem antriebsseitigen Stirnrad des Stirnradgetriebes geeignet, wobei das antriebsseitige Stirnrad bezogen auf den angetriebenen und umgelenkten Schubkettenabschnitt außen angeordnet ist, so dass es in die Zähne von bis zu 3 oder 4 Zahnsegmentscheiben, je nach Ausführungsform der Kettenglieder, gleichzeitig eingreifen kann. Dabei liegen die geraden Randabschnitte dieser Zahnsegmentscheiben an einer gemeinsamen Umlenkrolle an, die gegenüber dem antriebsseitigen Zahnrad und der Schubkette innen angeordnet ist. Mit dieser Anordnung des Stirnrads ist es möglich, den Hebelarm, auf den die Kettenkraft des Schubkettenantriebs wirkt, sehr klein zu halten und es wird eine kraftverlustarme Umlenkung realisiert.

Hierzu ist das antriebsseitige Stirnrad vorzugsweise so breit, dass es außer in die Zähne der inneren Zahnsegmentscheiben der Kettenglieder in die Zähne deren äußerer Zahnsegmentscheiben eingreifen kann. Durch Eingriff des Stirnrads in die Zähne der äußeren Zahnsegmentscheiben wird die Schubkette symmetrisch angetrieben und besser geführt.

Statt mit einem einzigen antriebsseitigen Stirnrad des Stirnradgetriebes kann die voranstehende vorteilhafte Wirkung auch mit einer Gruppe miteinander verbundener antriebsseitiger Stirnräder erzielt werden, indem die Gruppe so breit ist, dass deren Stirnräder in die inneren Zahnsegmentscheiben der Kettenglieder und/oder deren äußeren Zahnsegmentscheiben eingreifen.

Zum Antrieb des oben erwähnten Stirnradgetriebes mit dem antriebsseitigen Stirnrad steht das Stirnradgetriebe über einen Zahnriementrieb und einen Schneckentrieb mit einem Elektromotor als Antriebsquelle in getriebetechnischer Verbindung. Der Zahnriementrieb ist als erste, die Drehzahl des Elektromotors herabsetzende Getriebestufe vorgesehen, deren Antriebsseite mit dem Schneckentrieb verbunden ist, um diesen mit kleinem Verschleiß und hohem Wirkungsgrad unter geringer Geräuschentwicklung anzutreiben. Das in die antriebsseitige Schnecke eingreifende Schneckenrad des Schneckentriebs ist über ein Stirnrad mit den weiteren Elementen des Stirnradgetriebes getriebetechnisch verbunden, welches auch das antriebsseitige Stirnrad aufweist, das in die Zähne eines Kettenglieds eingreift.

Weiterhin kann der Elektromotor des Kettenantriebs vorteilhaft mit seiner Motorwelle über eine Schlauchkupplung mit einer eingangsseitigen Welle des Zahnriementriebes gekuppelt sein, um keine Vibrationen zwischen dem Elektromotor und dem Zahnriementrieb sowie dem in Kraftflussrichtung folgenden Stirnradgetriebe zu übertragen.

Zur erhöhten zulässigen Kraftübertragung und zur Verhinderung des Abknickens der Schubkette in transversaler Richtung können jeweils zwei an einer der beiden Längsseiten der Schubkette fluchtend aufeinander folgende Abschnitte der Scheibenpakete über einen laschenförmigen Kettenzuganker um die Bolzen durch die aufeinanderfolgenden Endabschnitte schwenkbar miteinander verbunden sein.

Fertigungsgünstig ist der jeweilige Kettenzuganker als flache Lasche mit zwei abgerundeten Endabschnitten ausgebildet, in denen jeweils ein Bolzenaufnahmeloch ausgeformt ist, das mittels der Bolzen mit einer Reihe Bolzenaufnahmelöcher des Scheibenpakets aus Zahnsegmentscheiben fluchten kann.

Bei einer besonders bevorzugten alternativen Antriebsvariante wirkt die Antriebswelle des Elektromotors über eine Getriebestufe, die ein Winkelgetriebe mit einem evoloidverzahnten Kronenrad sowie ggf. weitere Zahnräder aufweist, auf das Antriebsrad für die Schubkette. Die bislang übliche Kombination aus Schnecke / Schneckenrad kann dabei entfallen, und bei gleichen äußeren Abmessungen wie bislang können deutlich größere Kräfte übertragen werden. Die Erfindung wird im Folgenden anhand eines Ausführungsbeispiels einer Zahnsegmentscheibe, die zum Zusammensetzen eines Kettenglieds verwendbar ist, eines Ausführungsbeispiels des Kettenglieds, sowie eines Ausführungsbeispiels eines an die Kettenglieder aus solchen Zahnsegmentscheiben angepassten Kettenantriebs erläutert. Es zeigen:
- Figur 1: eine Vorderansicht auf eine Zahnsegmentscheibe,
- Figur 2: eine isometrische Ansicht von oben auf die Vorderseite der Zahnsegmentscheibe nach Figur 1,
- Figur 3: eine isometrische Ansicht von oben auf die Rückseite einer Zahnsegmentscheibe gemäß Figur 1,
- Figur 4: eine Draufsicht auf die Zahnsegmentscheibe gemäß Figur 1,
- Figur 5: einen Schnitt durch die Zahnsegmentscheibe gemäß Figur 1 in der Schnittebene A-A,
- Figur 6: eine Ansicht auf eine Stirnseite der Zahnsegmentscheibe gemäß Figur 1,
- Figur 7: einen Schnitt durch die Zahnsegmentscheibe gemäß Figur 1 in der Schnittebene B-B,
- Figur 8: eine isometrische Ansicht auf einen angetriebenen und umgelenkten Schubkettenabschnitt bestehend aus Zahnsegmentscheiben gemäß den Figuren 1 bis 7 in einem Antriebs- und Umlenkbereich mit einem antriebsseitigen Stirnrad eines Kettenantriebs, das in den Schubkettenabschnitt eingreift,
- Figur 9: eine isometrische Gesamtdarstellung des Kettenantriebs, dessen Abdeckungen teilweise entfernt sind,
- Figur 10: eine isometrische Ansicht auf einen antriebsseitigen Teil des Kettenantriebs mit einem Elektromotor und einem Zahnriemengetriebe,
- Figur 11: eine isometrische Darstellung des Kettenantriebs gemäß Figur 9 mit Abdeckungselementen,
- Figur 12: in perspektivischer Darstellung einen umgelenkten Schubkettenabschnitt einer um außenliegende Kettenzuganker erweiterten Variante einer Schubkette, hier mit einem endseitig angebrachten Anschlussteil, wobei der zugehörige Kettenantrieb der Übersichtlichkeit halber nicht dargestellt ist,
- Figur 13: den Schubkettenabschnitt gemäß Figur 12 in Seitenansicht,
- Figur 14: den Schubkettenabschnitt gemäß Figur 12 und 13 in einer Draufsicht,
- Figur 15: eine seitliche Draufsicht auf einen Kettenzuganker,
- Figur 16: eine perspektivische Gesamtdarstellung einer alternativen Variante eines Kettenantriebs mit teilweise abgenommenen Gehäuse- und Verkleidungsteilen,
- Figur 17: eine seitliche Draufsicht auf den Kettenantrieb gemäß Figur 16, wobei hier einige Komponenten durch Gehäuse- und Verkleidungsteile verdeckt sind,
- Figur 18: eine erste perspektivische Ansicht des auf die wesentlichen kinematischen Komponenten reduzierten Antriebsstrangs des Kettenantriebs gemäß Figur 16, und
- Figur 19: eine zweite perspektivische (hier: rückwärtige) Ansicht des Antriebsstrangs aus FIG. 18.

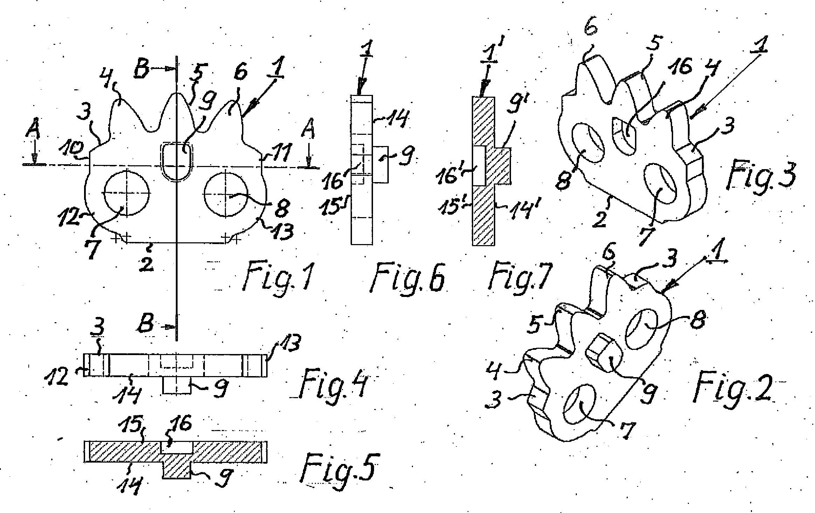

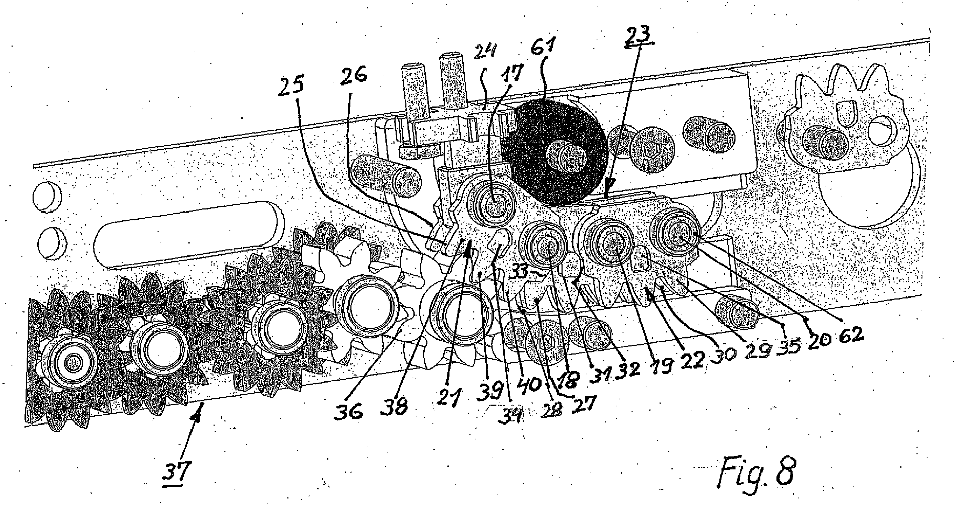

Die einem Zahnsegment eines Zahnrads nachgebildete Form der Zahnsegmentscheibe 1 geht aus den Figuren 1, 2 und 3 hervor. Die Form ist durch einen in Längsrichtung der Zahnsegmentscheibe in Figur 1 verlaufenden geraden Randabschnitt 2, der über der Dicke der Zahnsegmentscheibe plan ist, sowie durch einen diesem in Figur 1 oben gegenüberliegenden unterbrochenen bogenförmigen Randabschnitt 3 gekennzeichnet, aus dem drei Zähne 4, 5 und 6 divergierend nach oben hervorstehen. Der bogenförmige Randabschnitt ist den Zähnen 4 und 5 bzw. 5 und 6, sowie rechts neben dem Zahn 6 angenähert. Die von dem bogenförmigen Randabschnitt 3 der Zahnsegmentscheibe 1 nach oben divergierenden Zähne 4, 5 und 6 konvergieren in der entgegengesetzten Richtung zu einem Punkt, welcher dem Mittelpunkt eines Zahnrads entspricht, dem die Zahnradsegmentscheibe 1 teilweise nachgebildet ist. Die Zahnsegmentscheibe 1 weist ferner zwei in Längsrichtung beabstandete Bolzenaufnahmelöcher 7, 8 auf, die bei Montage eines Kettenglieds jeweils einen der Bolzen 17 bis 20 aufnehmen, deren Stirnseiten in Figur 8 sichtbar sind. Die Außenform der Zahnsegmentscheibe 1 ist durch stirnseitig außen einander gegenüberliegende Abstützflächen 10 und 11, die im Wesentlichen quer zu der Längsrichtung der Zahnsegmentscheibe 1 senkrecht verlaufen und sich an diese anschließende bogenförmige Abschnitte 12 und 13, die ebenfalls im Wesentlichen senkrecht verlaufen und an dem geraden Randabschnitt 2 enden, geschlossen. Von der Vorderseite 14 der Zahnsegmentscheibe 1 steht eine schildförmige Nocke 9 in der auf den geraden Randabschnitt 2 bezogenen Höhe der Abstützflächen 10 und 11 ab, die in eine kongruent geformte Vertiefung 16' in einer Rückseite 15' einer formgleich wie die Zahnsegmentscheibe 1 ausgebildeten Zahnsegmentscheibe 1', siehe Figur 7, mit Übermaß einsetzbar ist. Dies kann aus den Figuren 6 und 7 für den angenommenen Fall entnommen werden, dass die Zahnsegmentscheibe 1' in Figur 7 die zu der Zahnsegmentscheibe 1 in Figur 6 benachbarte Zahnscheibe darstellt.

Zur Veranschaulichung, wie Kettenglieder einer Schubkette aus untereinander formgleichen Zahnsegmentscheiben mit den Formmerkmalen zusammengesetzt sind, die in den Figuren 1 bis 7 mit den Zahnsegmentscheiben 1, 1' dargestellt sind, wird auf Figur 8 Bezug genommen. Darin sind zwei Kettenglieder 21, 22 eines angetriebenen und umgelenkten Schubkettenabschnitts 23 in Antriebs- und Umlenkposition gezeigt, an den sich rechts unten ein gerader Schubkettenabschnitt anschließen kann, der mit dem Kettenglied 22 verbunden ist. In den angetriebenen und umgelenkten 10 Schubkettenabschnitt 23 ist links erhöht ein Anschlussteil 24 für ein mit der Schubkette zu betätigendes Objekt eingesetzt.

Wie aus Figur 8 ersichtlich umfasst das Kettenglied 21 zwei äußere parallel und bündig angeordnete Kreissegmentscheiben 25 und 26, durch die Bolzen 17, 18 gesteckt sind, die sie zusammenhalten. Zwischen den beiden äußeren Zahnsegmentscheiben 25 und 26 ist ein Abschnitt eines schwenkbaren Innenteils, bestehend aus zwei bündig zueinander angeordneten inneren Zahnsegmentscheiben 27, 28 eingeschlossen. Hierzu ist der Bolzen 18 auch durch diese inneren Zahnsegmentscheiben 27, 28 gesteckt. Das Kettenglied 21 ist deswegen durch die beiden äußeren Zahnsegmentscheiben 25, 26 und die von ihnen teilweise eingeschlossenen beiden inneren Scheiben 27, 28 definiert. In ähnlicher Weise nimmt das Kettenglied 22, das sich an das Kettenglied 21 in Figur 8 rechts unten anschließt, zwischen äußeren Zahnsegmentscheiben 29, 30 einen zweiten Abschnitt der zueinander bündig angeordneten inneren Zahnsegmentscheiben 27, 28 auf. Den inneren Zahnsegmentscheiben 27, 28 entsprechende weitere innere Zahnsegmentscheiben können zwischen die beiden äußeren Zahnsegmentscheiben 29, 30 des Kettenglieds 22 eingeschoben sein und mit dem Bolzen 20 schwenkbar zwischen den beiden äußeren Zahnsegmentscheiben 29, 30 gehalten werden.

Figur 8 zeigt weiterhin eine schildförmige Nocke 31, die aus der inneren Zahnsegmentscheibe 27 ausgeformt ist. Die Nocke 31 kann an einem bogenförmigen Abschnitt anliegen, der sich an eine gerade Abstützfläche 33 der äußeren Zahnsegmentscheibe 25 des Kettenglieds 21 anschließt, wenn dieses durch einen Kettenantrieb von links nach rechts in Figur 8 geschoben wird, und sich dabei andererseits an einer geraden Abstützfläche 32 des Kettenglieds 22 abstützen kann. In Figur 8 verdeckt ist eine bündig zu der Nocke 31 ausgeformte, nicht bezeichnete Nocke der inneren Zahnsegmentscheibe 28, wobei sich die verdeckte Nocke in eine kongruente Vertiefung der inneren Zahnsegmentscheibe 27 erstreckt und in dieser mit Übermaß formschlüssig anliegt. Derartige Vertiefungen 34, 35 sind auch in den äußeren Zahnsegmentscheiben 25 und 29 der Kettenglieder 21 und 22 vorgesehen, dort jedoch funktionslos und durch die formgleiche Ausbildung sämtlicher Zahnsegmentscheiben bedingt. Die Nocke 31 dient zur bündigen Verbindung der inneren Zahnsegmentscheiben 27 und 28 sowie gegebenenfalls zur Schubübertragung von dem Kettenglied 21 zu dem Kettenglied 22.

Aus Figur 8 kann weiterhin entnommen werden, wie die Schubkette mit dem Schubkettenabschnitt 23 in Antriebs- und Umlenkposition mittels eines antriebsseitigen Stirnrads 36 eines Stirnradgetriebes 37 angetrieben wird, indem das Stirnrad 36 zwischen die Zähne 38, 39, 40 der äußeren Zahnsegmentscheibe 25 und entsprechende Zähne der Zahnsegmentscheibe 26 eingreifen kann, weil deren Abstand durch die Breite des Stirnrads 36 überbrückt wird. Dadurch wird das Kettenglied 21 seitlich gut geführt und die Schubkraft wird gleichmäßig übertragen.

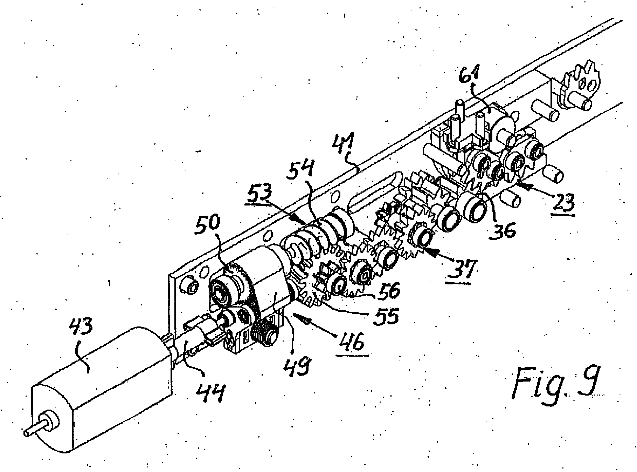

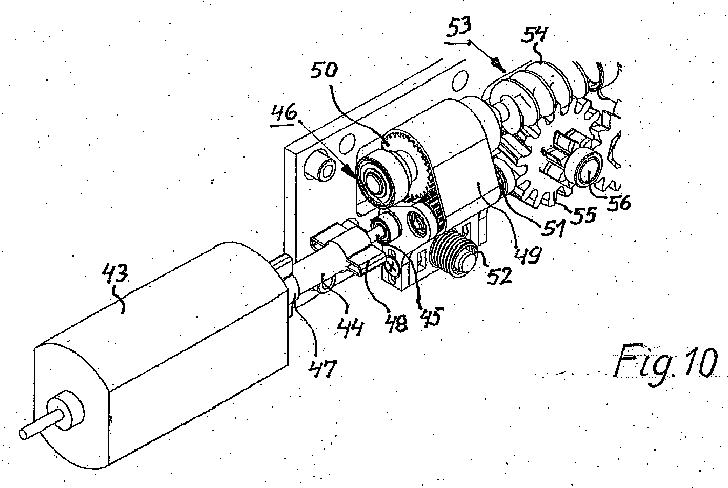

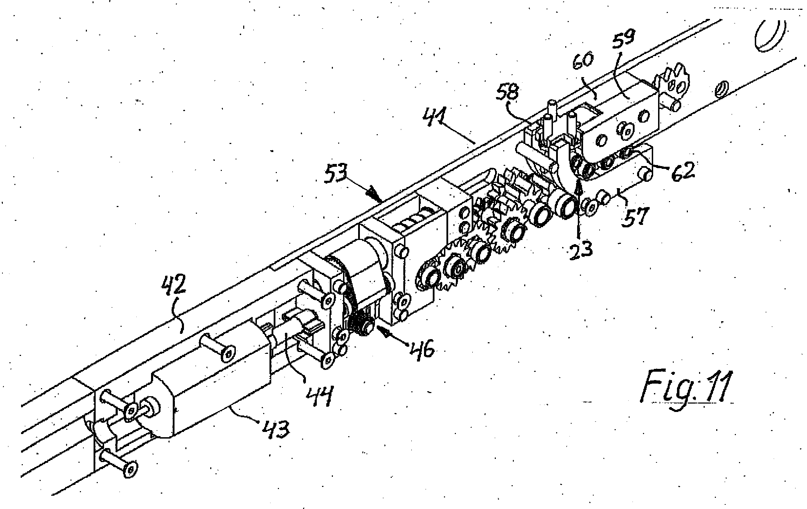

Figur 9 zeigt die Antriebseinheit, zu der das Stirnradgetriebe 37 mit dem antriebsseitigen Stirnrad 36 gehört, an einem Gehäusewandabschnitt 41 eines Gehäuses, welches auch die Schubkette mit dem Schubkettenabschnitt 23 einschließt. An den in den Figuren 9 und 11 linken Enden des Kettenantriebs ist ein Elektromotor 43 angeordnet, dessen Motorwelle über eine Schlauchkupplung 44 mit einer Welle 45 eines Zahnriementriebes 46 gekuppelt ist, siehe auch Figur 10. Zur Befestigung der Schlauchkupplung 44 dienen Schlauchklemmen 47, 48. Mit der Welle 45 des Zahnriementriebs 46 ist koaxial ein den flachen Zahnriemen 49 antreibendes Zahnriemenrad verbunden, wobei der Zahnriemen 49 um ein antriebsseitiges Zahnriemenrad 50 zu einem Endlosband umgelenkt wird. Ein Zahnriemenspannrad 51 läuft mit dem Zahnriemen 49 mit und dient in Verbindung mit einer Feder 52 als Zahnriemenspanner. Der Zahnriementrieb 46 stellt, z. B. mit dem Untersetzungsverhältnis 1:5, die erste Untersetzungsstufe des Kettenantriebs dar und gestattet eine verschleißgünstige unkomplizierte Gesamtgetriebekonstruktion bis zu dem antriebsseitigen Stirnrad 36 des Stirnradgetriebes 37. Der Zahnriementrieb 46 gewährleistet einen hohen Wirkungsgrad bei leisem Lauf.

Zu dem Kettenantrieb gehört ein zwischen dem antriebsseitigen Zahnriemenrad 50 und dem Stirnradgetriebe 37 angeordnete Schneckenradgetriebestufe bzw. ein Schneckentrieb 53, der eine Schnecke 54 aufweist, in die ein Schneckenrad 55 eingreift. Auf einer Schneckenradwelle 56 sitzt ein das Stirnradgetriebe 37 antreibendes Stirnrad 56.

Die isometrische Darstellung des Kettenantriebs in Figur 11 zeigt in Ergänzung der Darstellung gemäß Figur 9 äußere Führungselemente 57, 58 sowie innere Führungselemente 59, 60, die mit an den Enden der Bolzen der Schubkettenglieder angebrachten Röllchen 62 des Schubkettenabschnitts 23 in Umlenk- und Antriebsposition dieses Schubkettenabschnitts 23 zusammenwirken können. Figur 11 zeigt ferner nicht bezeichnete Abdeckungen und Querwände im Bereich des Zahnriementriebs 46 und des Schneckentriebs 53.

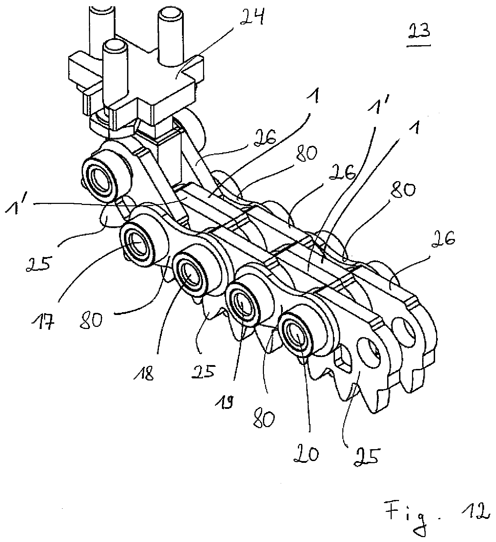

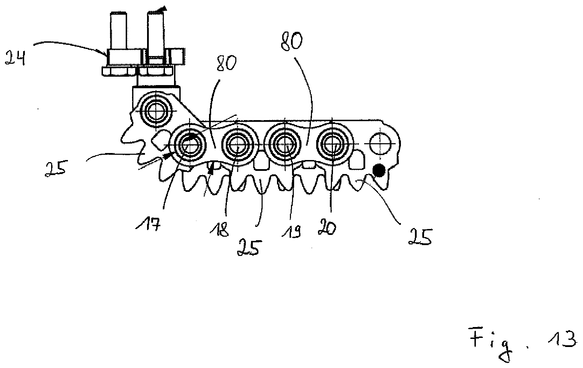

Der in den Figuren 12 bis 14 dargestellte Schubkettenabschnitt 23, hier mit endseitig angebrachtem Anschlussteil 24, beruht auf dem in den Figuren 1 bis 8 dargestellten Aufbau, der nun allerdings um außen liegende Kettenzuganker 80 erweitert wurde. Zur verbesserten Übertragung von Zug- und Schubkräften und zur Verhinderung des Abknickens der Schubkette quer zur Transportrichtung kann zumindest an einer Außenseite des Kettenglieds, die dem Scheibenpaket des Kettenglieds außen gegenüberliegt bzw. anliegt, und bevorzugt an beiden Außenseiten, jeweils ein flacher Kettenzuganker 80 parallel zu dem Scheibenpaket mittels dessen beiden Bolzen, z. B. 18, 19, angebracht sein. Durch die sandwichartige beidseitige Anbringung wird insbesondere eine Symmetrierung der Kraftübertragung erreicht.

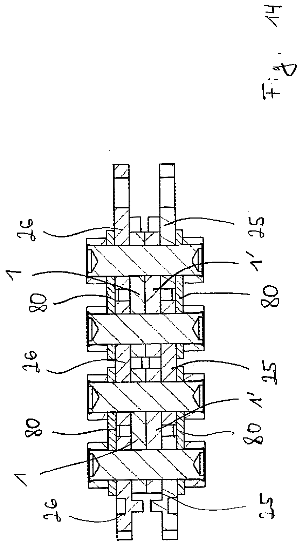

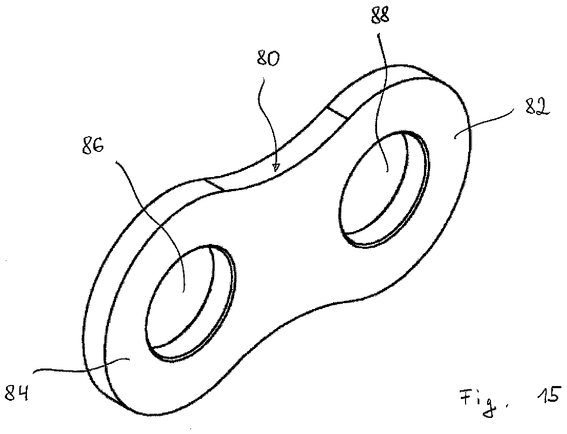

Fig. 15 zeigt die einfache Laschenform des Kettenzugankers 80 mit abgerundeten Endabschnitten 82, 84 und jeweils einem Bolzenaufnahmeloch 86, 88. Der Kettenzuganker 80 stellt einen Außenteil des Kettenglieds dar. Wie aus den Figuren 12 bis 14 ersichtlich, liegt der jeweilige Kettenzuganker 80 außen flach an den äußeren Zahnsegmentscheiben 25 bzw. 26 aufeinanderfolgender Kettenglieder an und überbrückt gewissermaßen in beweglicher Weise den Zwischenraum zwischen zwei aufeinanderfolgenden äußeren Zahnsegmentscheiben 25 bzw. 26. Die zur Verbindung der Kettenglieder vorgesehenen Bolzen 17, 18, 19, 20 sind gegebenenfalls etwas länger ausgeführt als bei der weiter oben beschriebenen Variante, damit sie (in der Draufsicht gemäß Fig. 14) genügend weit über die äußeren Zahnsegmentscheiben 25, 26 hervorstehen, um auch noch die Bolzenaufnahmelöcher 86, 88 der Kettenzuganker 80 dreh- bzw. schwenkbar zu durchsetzen. Von den beiden einer äußeren Zahnsegmentscheibe 25 bzw. 26 zugeordneten Bolzen, z. B. 18, 19, ist einer einem ersten Kettenzuganker 80 und der andere einem zweiten Kettenzuganker 80 zugeordnet, so dass sich in Längsrichtung gesehen eine alternierende Anordnung von Zahnsegmentscheiben 25 bzw. 26 und Kettenzugankern 80 ergibt. Damit können die gewünschte Umlenkung der Schubkette einerseits und die geradlinige Schubbewegung andererseits weiterhin wie bislang beschrieben erfolgen; es ergibt sich aber eine vorteilhafte Versteifung der Kette in transversaler Richtung.

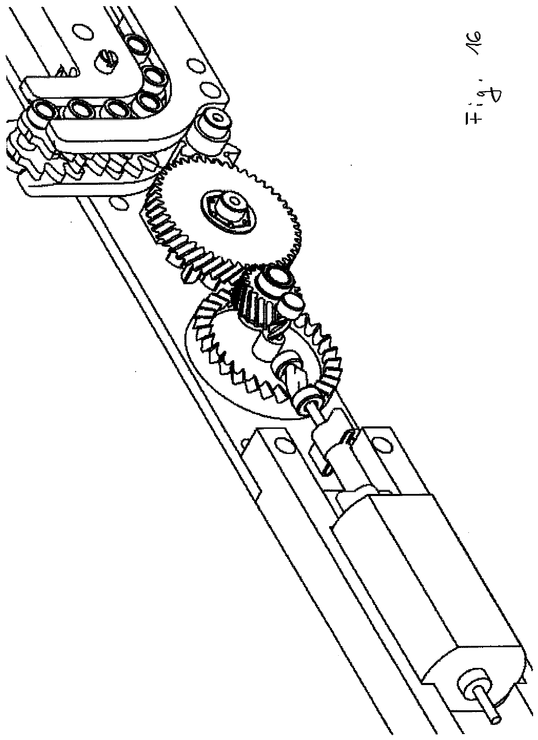

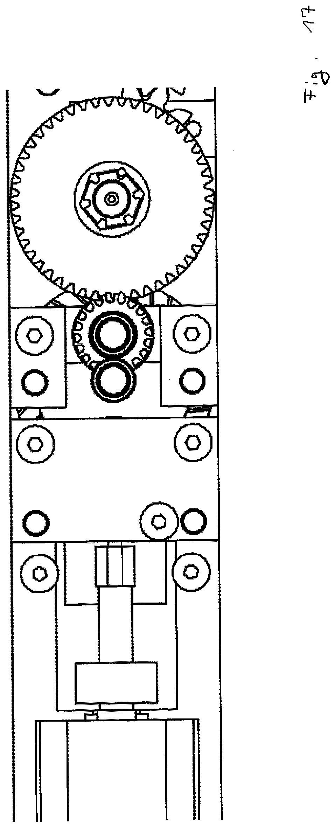

Der in den Figuren 16 bis 19 dargestellte Kettenantrieb stellt eine Alternative zu dem Antrieb gemäß den Figuren 9 bis 11 dar und ist wie dieser für alle hier beschriebenen Typen von Schubketten verwendbar.

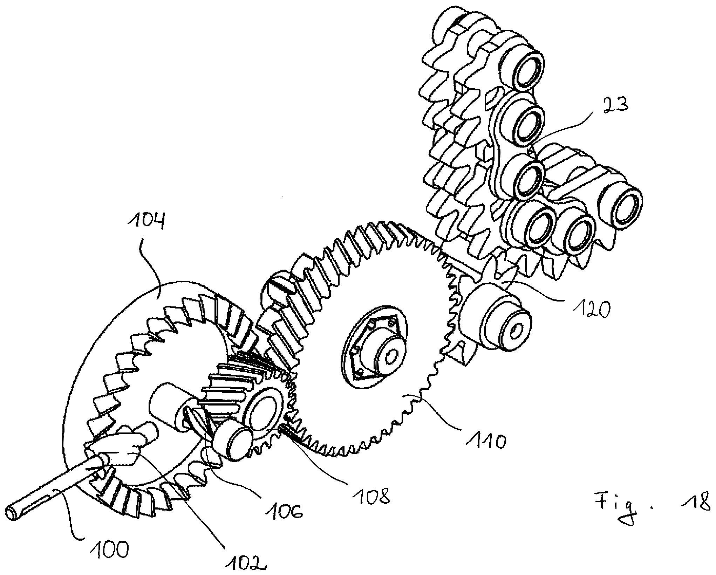

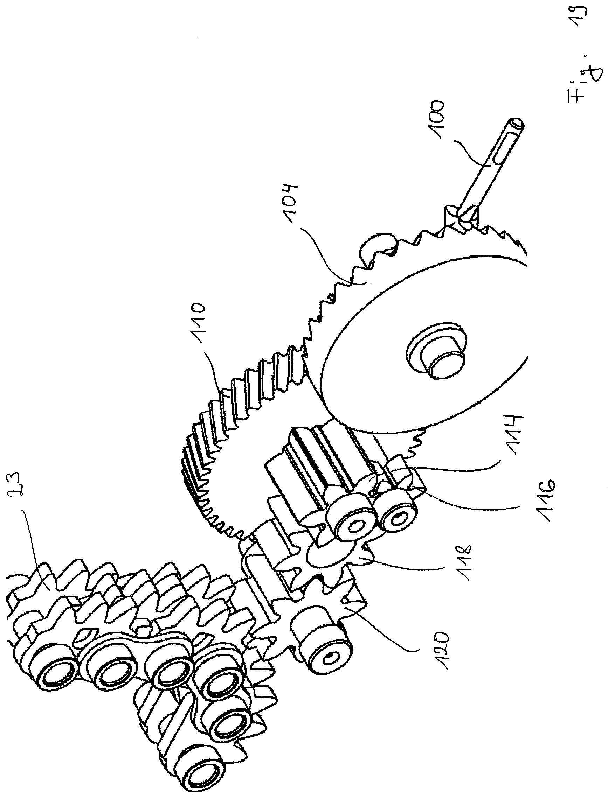

Der am besten anhand von den Figuren 18 und 19 erkennbare Aufbau ist derart, dass die Drehzahl der Motorwelle 100 flexibel über eine Schlauchkupplung auf das Zylinderrad (Ritzel) 102 und von diesem auf das Kronenrad 104 abgegeben wird. Dadurch ist ein Winkelgetriebe realisiert.

Das Zahnrad 106 ist mit dem Kronenrad 104 über eine gemeinsame Welle fest verbunden und treibt das Zwischenrad 108 an. Das Zwischenrad 108 überträgt das Antriebsmoment auf das Zahnrad 110. An dem Zahnrad 110 ist das Zahnrad 114 über eine gemeinsame Welle befestigt. Das Zahnrad 114 treibt über das Zahnrad 116 und über das Gegenrad 118 das Antriebsrad 120 für die rückensteife Kette an.

Die Räder 102, 104, 106, 108 und 110 haben eine Evoloidverzahnung.

Die Evoloidverzahnung der Räder 102 und 106 und der mit ihnen zusammenwirkenden Räder ersetzt die bei dem weiter oben beschriebenen Antrieb gemäß den Figuren 9 bis 11 vorhandene Getriebestufe mittels Schnecke / Schneckenrad. Diese neue Konstruktion kann bei gleichen Abmessungen des erforderlichen Platzbedarfes deutlich größere Kräfte übertragen.

### Bezugszeichenliste

- 1: Zahnsegmentscheibe
- 1': Zahnsegmentscheibe
- 2: gerader Randabschnitt
- 3: bogenförmiger Randabschnitt
- 4: Zahn
- 5: Zahn
- 6: Zahn
- 7: Bolzenaufnahmeloch
- 8: Bolzenaufnahmeloch
- 9: Nocke
- 10: Abstützfläche
- 11: Abstützfläche
- 12: bogenförmiger Abschnitt, vertikal
- 13: bogenförmiger Abschnitt, vertikal
- 14: Vorderseite
- 14': Vorderseite
- 15: Rückseite
- 15': Rückseite
- 16: Vertiefung
- 16': Vertiefung
- 17: Bolzen
- 18: Bolzen
- 19: Bolzen
- 20: Bolzen
- 21: Kettenglied
- 22: Kettenglied
- 23: Schubkettenabschnitt
- 24: Anschlussteil
- 25: äußere Zahnsegmentscheibe
- 26: äußere Zahnsegmentscheibe
- 27: innere Zahnsegmentscheibe
- 28: innere Zahnsegmentscheibe
- 29: äußere Zahnsegmentscheibe
- 30: äußere Zahnsegmentscheibe
- 31: Nocke
- 32: gerade Abstützfläche
- 33: gerade Abstützfläche
- 34: Vertiefung
- 35: Vertiefung
- 36: Stirnrad
- 37: Stirnradgetriebe
- 38: Zahn
- 39: Zahn
- 40: Zahn
- 41: Gehäuse-Wandabschnitt
- 42: Motorgehäuseteil
- 43: Elektromotor
- 44: Schlauchkupplung
- 45: Welle
- 46: Zahnriementrieb
- 47: Schlauchklemme
- 48: Schlauchklemme
- 49: Zahnriemen
- 50: antriebsseitiges Zahnriemenrad
- 51: Zahnriemenspannrad
- 52: Feder
- 53: Schneckentrieb
- 54: Schnecke
- 55: Schneckenrad
- 56: Schneckenradwelle
- 57: äußeres Führungselement
- 58: äußeres Führungselement
- 59: inneres Führungselement
- 60: inneres Führungselement
- 61: Umlenkrolle
- 62: Röllchen
- 80: Kettenzuganker
- 82: Endabschnitt
- 84: Endabschnitt
- 86: Bolzenaufnahmeloch
- 88: Bolzenaufnahmeloch
- 100: Motorwelle
- 102: Zylinderrad
- 104: Kronenrad
- 106: Zahnrad
- 108: Zahnrad (Zwischenrad)
- 110: Zahnrad
- 114: Zahnrad
- 116: Zahnrad
- 118: Zahnrad (Gegenrad)
- 120: Antriebsrad

## Patentansprüche

1. Mit einem Kettenantrieb betätigbare schiebesteife Schubkette, die aus formgleichen Scheiben bündig zusammengesetzte Kettenglieder (21, 22) umfasst, wobei jede Scheibe wenigstens einen bogenförmigen Randabschnitt (3), der sich im Wesentlichen in einer Längsrichtung der Scheibe erstreckt, einen dem bogenförmigen Randabschnitt außen gegenüberliegenden Randabschnitt (2) und zahnförmige Vorsprünge an einem der Randabschnitte (2, 3) aufweist, wobei in jeder Scheibe zwei Bolzenaufnahmelöcher (7, 8) vorhanden sind, die geeignet sind, jeweils einen, mehrere Scheiben zusammenhaltende Bolzen (17 bis 20) aufzunehmen,
**dadurch gekennzeichnet**
**dass** die Scheibe in Form einer Zahnsegmentscheibe (1, 1') einem Zahnsegment eines Zahnrads nachgebildet ist, so dass aus dem bogenförmigen Randabschnitt (3) der Zahnsegmentscheibe (1, 1') Zähne (4 bis 6) nach außen divergierend vorstehen, und dass der dem bogenförmigen Randabschnitt (3) außen gegenüberliegende Randabschnitt (2) in Längsrichtung der Zahnsegmentscheibe (1, 1') gerade bzw. plan ist.

2. Schubkette nach Anspruch 1,
**dadurch gekennzeichnet,**
**dass** das Kettenglied (1, 1') jeweils ausschließlich aus den formgleichen, mittels der beiden Bolzen (17, 18, 19, 20) zusammengesetzten Zahnsegmentscheiben (1, 1', 25 bis 30) besteht.

3. Schubkette nach Anspruch 1 oder 2,
**dadurch gekennzeichnet,**
**dass** jede Zahnsegmentscheibe (1, 1') wenigstens zwei stirnseitig außen einander gegenüberliegende Abstützflächen (10, 11) im Wesentlichen quer zu der Längsrichtung der Zahnsegmentscheibe (1, 1') aufweist und dass eine Nocke (9) in Höhe der Abstützflächen (10, 11) von einer Seite (14) der Zahnsegmentscheibe (1, 1') vorsteht.

4. Schubkette nach Anspruch 3
**dadurch gekennzeichnet,**
**dass** auf der der vorstehenden Nocke (9) außen gegenüberliegenden Seite (14a) der Zahnsegmentscheibe (1, 1')jeweils eine Vertiefung (16) geformt ist, in die die Nocke (9) einer zu der Zahnscheibe (1, 1') formgleichen, seitlich bündig benachbarten Zahnsegmentscheibe mit Übermaß passt.

5. Schubkette nach einem der Ansprüche 1 bis 4,
**dadurch gekennzeichnet,**
**dass** die Zahnsegmentscheibe (1, 1', 25 bis 30) drei Zähne (4 bis 6) aufweist.

6. Schubkette nach einem der vorangehenden Ansprüche,
**dadurch gekennzeichnet,**
**dass** die Zahnsegmentscheibe (1, 1', 25 bis 30) ein Stanzteil ist.

7. Schubkette nach einem der Ansprüche 1 bis 5,
**dadurch gekennzeichnet,**
**dass** die Zahnsegmentscheibe (1, 1', 25 bis 30) ein gegossenes Teil ist.

8. Schubkette nach einem der Ansprüche 1 bis 7,
**dadurch gekennzeichnet,**
**dass** das Kettenglied (21, 22) zwischen zwei seitlich äußeren parallel und bündig angeordneten Zahnsegmentscheiben (25, 26, 29, 30) ein Innenteil bestehend aus nur einer Zahnsegmentscheibe (27) aufweist, die über jeweils eine Stirnseite der beiden äußeren Zahnsegmentscheiben (25, 26, 29, 30) herausragt.

9. Schubkette nach einem der Ansprüche 1 bis 7,
**dadurch gekennzeichnet,**
**dass** das Kettenglied (21; 22) zwischen zwei seitlich äußeren parallel und bündig angeordneten Zahnsegmentscheiben (25, 26; 29, 30) ein Innenteil bestehend aus zwei Zahnsegmentscheiben (27, 28) aufweist, die miteinander verbunden sind, und dass das Innenteil über jeweils eine Stirnseite der beiden äußeren Zahnsegmentscheiben (25, 26; 29, 30) herausragt.

10. Schubkette nach einem der vorhergehenden Ansprüche,
**dadurch gekennzeichnet**
**dass** jeweils zwei an einer der Längsseiten der Schubkette aufeinander folgende Endabschnitte benachbarter Pakete von Zahnsegmentscheiben (25, 26) über jeweils einen laschenförmigen Kettenzuganker (80) schwenkbar um die Bolzen (17, 18, 19, 20) miteinander verbunden sind.

11. Schubkette nach Anspruch 10,
**dadurch gekennzeichnet,**
**dass** der jeweilige Kettenzuganker (80) als flache Lasche mit zwei abgerundeten Endabschnitten (82, 84) ausgebildet ist, in denen jeweils ein Bolzenaufnahmeloch (86, 88) ausgeformt ist, das mit einer Reihe Bolzenaufnahmelöcher (7, 8) des Scheibenpakets fluchtet.

12. Kettenantrieb mit einer Schubkette nach einem der vorhergehenden Ansprüche, der einen Elektromotor (43) und ein Stirnradgetriebe (37) umfasst,
**dadurch gekennzeichnet,**
**dass** ein antriebsseitiges Stirnrad (36) des Stirnradgetriebes (37) bezüglich einem in Antriebs- und Umlenkposition angetriebenen und umgelenkten Schubkettenabschnitt (23) außen angeordnet ist, so dass das antriebsseitige Stirnrad (36) des Stirnradgetriebes (37) in die Zähne (38, 39, 40) der Zahnsegmentscheiben eingreift, und dass die geraden Randabschnitte dieser Zahnsegmentscheiben (25 bis 30) an einer Umlenkrolle (61) anliegen, die gegenüber dem antriebsseitigen Stirnrad (36) innen angeordnet ist.

13. Kettenantrieb nach Anspruch 12,
**dadurch gekennzeichnet,**
**dass** das antriebsseitige Stirnrad (36) so breit ist, dass das Stirnrad (36) außer in die inneren Zahnsegmentscheiben (27, 28) der Kettenglieder (21, 22) in deren äußeren Zahnsegmentscheiben (25, 26; 29, 30) eingreifen kann.

14. Kettenantrieb nach Anspruch 13,
**dadurch gekennzeichnet,**
**dass** eine Gruppe nebeneinander formschlüssig verbundener Stirnräder so breit ist, dass Stirnräder der Gruppe in die inneren Zahnsegmentscheiben (27, 28) der Kettenglieder (21, 22) und/oder die äußeren Zahnsegmentscheiben (25, 26; 29, 30) eingreifen können.

15. Kettenantrieb nach einem der Ansprüche 12 bis 14,
**dadurch gekennzeichnet,**
**dass** eine Getriebestufe vorhanden ist, die ein Winkelgetriebe mit einem evoloidverzahnten Kronenrad (104) aufweist.

## Claims

1. Push chain which is rigid when pushed and can be actuated by a chain drive, comprising chain links (21, 22) assembled in a flush manner from discs that are identical in shape, each disc having at least one curved edge portion (3) extending substantially in a longitudinal direction of the disc, an edge portion (2) externally opposite the curved edge portion, and tooth-shaped projections on one of the edge portions (2, 3), two bolt receiving holes (7, 8) being provided in each disc, which are each suitable for receiving bolts (17 to 20) that hold together a plurality of discs, **characterised in that** the disc in the form of a toothed segment disc (1, 1') is modelled on a toothed segment of a gear wheel such that teeth (4 to 6) project from the curved edge portion (3) of the toothed segment disc (1, 1') so as to diverge outwards, and **in that** the edge portion (2) which is externally opposite the curved edge portion (3) is straight and/or plane in the longitudinal direction of the toothed segment disc (1, 1').

2. Push chain according to claim 1, **characterised in that** each chain link (1, 1') consists exclusively of toothed segment discs (1, 1', 25 to 30) which are identical in shape and assembled by means of the two bolts (17, 18, 19, 20).

3. Push chain according to either claim 1 or claim 2, **characterised in that** each toothed segment disc (1, 1') has at least two support surfaces (10, 11) externally opposite one another on the end faces, which surfaces are substantially transverse to the longitudinal direction of the toothed segment disc (1, 1'), and **in that** a cam (9) projects from one side (14) of the toothed segment disc (1, 1') at the level of the support surfaces (10, 11).

4. Push chain according to claim 3, **characterised in that** a recess (16) is formed in the side (14a) of each toothed segment disc (1, 1') externally opposite the projecting cam (9), into which recess the cam (9) of an adjacent and laterally flush toothed segment disc, which is identical in shape to the toothed disc (1, 1'), fits with interference.

5. Push chain according to any of claims 1 to 4, **characterised in that** the toothed segment disc (1, 1', 25 to 30) has three teeth (4 to 6).

6. Push chain according to any of the preceding claims, **characterised in that** the toothed segment disc (1, 1', 25 to 30) is a stamped part.

7. Push chain according to any of claims 1 to 5, **characterised in that** the toothed segment disc (1, 1', 25 to 30) is a cast part.

8. Push chain according to any of claims 1 to 7, **characterised in that** the chain link (21, 22) has, between two laterally outer, parallel and flush toothed segment discs (25, 26, 29, 30), an inner part consisting of only one toothed segment disc (27) which protrudes beyond each end face of the two outer toothed segment discs (25, 26, 29, 30).

9. Push chain according to any of claims 1 to 7, **characterised in that** the chain link (21; 22) has, between two laterally outer, parallel and flush toothed segment discs (25, 26; 29, 30), an inner part consisting of two toothed segment discs (27, 28) which are interconnected, and **in that** the inner part protrudes beyond each end face of the two outer toothed segment discs (25, 26; 29, 30).

10. Push chain according to any of the preceding claims, **characterised in that** two consecutive end portions of adjacent stacks of toothed segment discs (25, 26), which portions are aligned with one of the longitudinal sides of the push chain, are each interconnected via a bracket-shaped chain tension rod (80) so as to be pivotable about the bolts (17, 18, 19, 20).

11. Push chain according to claim 10, **characterised in that** the particular chain tension rod (80) is designed as a flat bracket having two rounded end portions (82, 84), in each of which a bolt receiving hole (86, 88) is formed that is aligned with a row of bolt receiving holes (7, 8) in the disc stack.

12. Chain drive having a push chain according to any of the preceding claims, comprising an electric motor (43) and a spur gear transmission (37), **characterised in that** a drive-side spur gear (36) of the spur gear transmission (37) is arranged externally with respect to a push chain portion (23) that is driven and deflected in a drive-and-deflecton position, such that the drive-side spur gear (36) of the spur gear transmission (37) engages in the teeth (38, 39, 40) of the toothed segment discs, and **in that** the straight edge portions of said toothed segment discs (25 to 30) rest against a deflection roller (61) which is arranged on the inside with respect to the drive-side spur gear (36).

13. Chain drive according to claim 12, **characterised in that** the drive-side spur gear (36) is sufficiently wide that the spur gear (36) can engage in the outer toothed segment discs (25, 26; 29, 30) of the chain links (21, 22) but cannot engage in the inner toothed segment discs (27, 28).

14. Chain drive according to claim 13, **characterised in that** a set of adjacent interlocking spur gears is sufficiently wide that spur gears of the set can engage in the inner toothed segment discs (27, 28) of the chain links (21, 22) and/or the outer toothed segment discs (25, 26; 29, 30).

15. Chain drive according to any of claims 12 to 14, **characterised in that** a gear stage is provided which has a bevel gear having an evoloid-toothed crown gear (104).

## Revendications

1. Chaîne de poussée rigide au glissement actionnable par un entraînement à chaîne, comprenant des maillons de chaîne (21, 22) en disques conformés, assemblés par affleurement, chaque disque présentant au moins une section de bord arquée (3) s'étendant sensiblement dans une direction longitudinale du disque, une section de bord extérieure (2) faisant face extérieurement à la section de bord arquée et des saillies en forme de dent sur l'une des sections de bord (2, 3), deux trous de réception de boulons (7, 8) étant prévus dans chaque disque, lesquels trous sont conçus pour recevoir respectivement un boulon maintenant ensemble une pluralité de disques (17 à 20),
**caractérisé en ce que**
le disque sous la forme d'un disque à segments dentés (1, 1') est reproduit selon un segment denté d'un engrenage, de sorte que des dents (4 à 6) font saillie vers l'extérieur de manière divergente à partir de la section de bord arquée (3) du disque à segments dentés (1, 1'), et que la section de bord extérieure (2) faisant face extérieurement à la section de bord arquée (3) est droite ou plane dans la direction longitudinale du disque à segments dentés (1, 1').

2. Chaîne de poussée selon la revendication 1,
**caractérisée en ce que**
le maillon de chaîne (1, 1') est composé à chaque fois exclusivement à partir des disques à segments dentés (1, 1', 25 à 30) conformés assemblés au moyen des deux boulons (17, 18, 19, 20).

3. Chaîne de poussée selon la revendication 1 ou 2,
**caractérisée en ce que**
chaque disque à segments dentés (1, 1') présente au moins deux surfaces d'appui (10, 11) se faisant face frontalement extérieurement de manière sensiblement transversale à la direction longitudinale du disque à segments dentés (1, 1'), et **en ce qu'**une came (9) fait saillie au niveau des surfaces d'appui (10, 11) d'un côté (14) du disque à segments dentés (1, 1').

4. Chaîne de poussée selon la revendication 3,
**caractérisée en ce**
**qu'**un évidement (16) respectif est formé sur ledit côté opposé (14a) du disque à segments dentés (1, 1') faisant face extérieurement à la came (9) faisant saillie, évidement dans lequel la came (9) d'un disque à segments dentés conformé et adjacent par affleurement latéral s'adapte de façon surdimensionnée au disque denté (1, 1').

5. Chaîne de poussée selon l'une des revendications 1 à 4,
**caractérisée en ce que**
le disque à segments dentés (1, 1', 25 à 30) comporte trois dents (4 à 6).

6. Chaîne de poussée selon l'une des revendications précédentes,
**caractérisée en ce que**
le disque à segments dentés (1, 1', 25 à 30) est une pièce matricée.

7. Chaîne de poussée selon l'une des revendications 1 à 5,
**caractérisée en ce que**
le disque à segments dentés (1, 1', 25 à 30) est une pièce moulée.

8. Chaîne de poussée selon l'une des revendications 1 à 7,
**caractérisée en ce que**
le maillon de chaîne (21, 22) présente une partie intérieure constituée d'un seul disque de segments dentés (27) entre deux disques à segments dentés (25, 26, 29, 30) latéralement extérieurs et disposés parallèlement et en affleurement, laquelle partie intérieure fait respectivement saillie au-delà d'une face frontale des deux disques à segments dentés (25, 26, 29, 30) extérieurs.

9. Chaîne de poussée selon l'une des revendications 1 à 7,
**caractérisée en ce que**
le maillon de chaîne (21 ; 22) présente une partie intérieure constituée de deux disques à segments dentés (27, 28) entre deux disques à segments dentés (25, 26, 29, 30) latéralement extérieurs et disposés parallèlement et en affleurement, lesquels disques sont reliés entre eux, et **en ce que** la partie intérieure fait respectivement saillie au-delà d'une face frontale des deux disques à segments dentés (25, 26, 29, 30) extérieurs.

10. Chaîne de poussée selon l'une des revendications précédentes,
**caractérisée en ce que**
deux sections d'extrémité respectives de paquets adjacents de disques à segments dentés (25, 26), qui sont séquentielles sur l'un des côtés longitudinaux de la chaîne de poussée, sont reliées de manière pivotante autour des boulons (17, 18, 19, 20) par un tirant d'ancrage de chaîne (80) respectif en forme d'attache.

11. Chaîne de poussée selon la revendication 10,
**caractérisée en ce que**
le tirant d'ancrage de chaîne (80) respectif est conçu sous forme d'attache plate présentant deux sections d'extrémité arrondies (82, 84), dans chacune desquelles un trou de réception de boulon (86, 88) est formé, lequel est aligné avec une rangée de trous de réception de boulons (7, 8) du paquet de disques.

12. Entraînement par chaîne comportant une chaîne de poussée selon l'une des revendications précédentes, comprenant un moteur électrique (43) et un engrenage à pignon droit (37),
**caractérisé en ce**
**qu'**un pignon droit côté entraînement (36) de l'engrenage à pignon droit (37) est disposé à l'extérieur par rapport à une section de chaîne de poussée (23) entraînée et renvoyée dans une position d'entraînement et de renvoi, de sorte que le pignon droit côté entraînement (36) de l'engrenage à pignon droit (37) vient en prise dans les dents (38, 39, 40) des disques à segments dentés, et **en ce que** les sections de bord droites desdits disques à segments dentés (25 à 30) prennent appui contre une poulie de renvoi (61) qui est disposée à l'intérieur par rapport au pignon droit côté entraînement (36).

13. Entraînement par chaîne selon la revendication 12,
**caractérisé en ce que**
le pignon droit côté entraînement (36) est si large que le pignon droit (36) peut venir en prise extérieurement dans les disques à segments dentés (27, 28) intérieurs des maillons de chaîne (21, 22) dans leurs disques à segments dentés (25, 26 ; 29, 30) extérieurs.

14. Entraînement par chaîne selon la revendication 13,
**caractérisé en ce**
**qu'**un groupe de pignons droits reliés de manière adjacente par complémentarité de forme est si large que les pignons droits du groupe peuvent venir en prise dans les disques à segments dentés (27, 28) intérieurs des maillons de chaîne (21,22) et/ou dans les disques à segments dentés (25, 26 ; 29, 30) extérieurs.

15. Entraînement par chaîne selon l'une des revendications 12 à 14,
**caractérisé en ce**
**qu'**un étage d'engrenage est prévu et comporte un engrenage conique présentant une couronne dentée (104) à denture évoloïde.
